# FASCICULE DE BREVET EUROPEEN

(11) **EP 1 512 595 B1**
(45) Date de publication et mention de la délivrance du brevet: **24.12.2008**
(21) Numéro de dépôt: 04292162.7
(22) Date de dépôt: 08.09.2004
(51) Int. Cl.: B60S 1/52

(54) **Trappe obturatrice d'une ouverture d'une pièce de carrosserie et pièce de carrosserie munie 'une ouverture**
Abdeckklappe für eine Öffnung in einer Kraftfahrzeugkarosserie, und Kraftfahrzeugkarosserie mit einer derartigen Abdeckklappe
Obturator for an opening in a vehicle body, and vehicle body part equipped with such an obturator

(30) Priorité: 08.09.2003 FR 0310578
(43) Date de publication de la demande: 09.03.2005
(73) Titulaire: COMPAGNIE PLASTIC OMNIUM, 69007 Lyon (FR)
(72) Inventeur: Falandry, Nicolas, 69003 Lyon (FR); Troton, Jean, 81375 München (DE); Ledig, Simon, 39240 Arinthod (FR)
(74) Mandataire: Remy, Vincent Noel Paul

(56) Documents cités:
- EP-A- 1 125 808
- WO-A-01/36239
- US-A- 5 769 528
- US-A1- 2003 093 955

## Description

La présente invention concerne une trappe obturatrice d'une ouverture d'une pièce de carrosserie et une pièce de carrosserie munie d'une ouverture.

On connaît les lave-phare, qui sont des organes montés à proximité des optiques d'un véhicule pour asperger leur vitrage avec de l'eau ou un mélange nettoyant

Pour des raisons esthétiques et pour le protéger des salissures, le lave-phare est souvent logé derrière la peau de pare-chocs et est monté mobile entre deux positions, l'une dite de repos dans laquelle le lave-phare se trouve en retrait de la peau de pare-chocs, l'autre dite d'utilisation dans laquelle le lave-phare fait saillie de la peau de pare-chocs à travers une ouverture ménagée dans ce dernier, le gicleur du lave-phare étant dirigé vers le vitrage de l'optique. Un exemple de lave-phare est décrit dans WO 01/36239, qui décrit les préambules des revendications indépendantes.

Dans cette hypothèse, la présence du lave-phare exige donc que soit ménagée une ouverture sur la peau du pare-chocs.

Mais comme les lave-phare sont de nos jours des équipements optionnels, ou réservés en série aux véhicules haut de gamme, il faut, dans le cadre de la fabrication d'un modèle de véhicule, gérer deux catégories de peaux de pare-chocs : celles pourvues d'une ouverture en vue de l'installation d'un lave-phares et celles dépourvues d'une telle ouverture.

En outre, il faut disposer, en plus d'un moule qui fournit des peaux sans ouverture, d'une machine de reprise qui permet de réaliser l'ouverture sur certaines peaux.

La présente invention vise à remédier à cet inconvénient, en proposant une solution dans laquelle une peau de pare-chocs peut être utilisée indifféremment avec ou sans lave-phare.

La présente invention a tout d'abord pour objet une trappe obturatrice d'une ouverture ménagée dans une pièce de carrosserie pour la saillie d'un organe mobile, caractérisée en ce qu'elle comporte d'une part des moyens de fixation à la pièce de carrosserie, pour un positionnement permanent de ladite trappe, d'autre part des moyens de fixation à l'organe mobile, pour un déplacement de ladite trappe solidairement avec l'organe mobile.

Ainsi, selon l'invention, la peau de pare-chocs comporte toujours une trappe, celle-ci pouvant être fixe en l'absence de lave-phare, ou mobile avec le lave-phare si ce dernier est présent sur la peau de pare-chocs.

Dans un mode de réalisation particulier, la trappe est dimensionnée pour pouvoir venir se loger dans l'épaisseur de la pièce de carrosserie lorsqu'elle en obture l'ouverture.

Dans un autre mode de réalisation, compatible avec les précédents, l'un au moins des moyens de fixation à la pièce de carrosserie est apte à être éliminé par cassure, afin de permettre aux moyens de fixation à l'organe mobile d'être opérationnels.

Par exemple, des pattes d'encliquetage peuvent servir à la fixation de la trappe sur la pièce de carrosserie mais géner le libre déplacement de la trappe avec l'organe mobile. En l'absence d'organe mobile sur la peau de pare-chocs, les pattes assurent le maintien de la trappe en position fixe sur la peau. Si en revanche un organe mobile est installé, la rupture et l'élimination des pattes permet à la trappe fixée sur l'organe mobile de suivre les déplacements de ce dernier et de se positionner convenablement sur la pièce de carrosserie pour obturer l'ouverture lorsque l'organe mobile se trouve en position de repos.

Selon d'autres caractéristiques avantageuses de l'invention, qui peuvent être prises seules ou en combinaison :
- Les moyens de fixation à la pièce de carrosserie sont des moyens d'encliquetage.
- Les moyens de fixation à l'organe mobile comprennent des moyens d'encliquetage à une platine destinée à être fixée sur l'organe mobile.
- L'ouverture est une ouverture de lave-phare.

L'invention a également pour objet une pièce de carrosserie munie d'une ouverture pour la saillie d'un organe mobile, comportant au voisinage de cette ouverture un agencement apte à recevoir un support pour ledit organe mobile, caractérisée en ce que ledit agencement comporte des moyens de fixation permanente d'une trappe obturatrice de l'ouverture.

Dans un mode de réalisation particulier, l'agencement comprend des nervures de centrage et de réglage de l'affleurement de la trappe obturatrice.

Selon l'invention, la pièce de carrosserie peut être en particulier une peau de pare-chocs.

Afin de mieux faire comprendre l'invention, on va en décrire maintenant un mode de réalisation donné à titre d'exemple non limitatif en référence aux dessins annexés dans lesquels :
- la figure 1 est une vue en perspective de trois quart d'une extrémité avant gauche d'un véhicule automobile,
- la figure 2 est un agrandissement de la partie II de la figure 1,
- la figure 3 est une vue en perspective du dessous d'une trappe obturatrice,
- la figure 4 est une vue en perspective du dessous d'une platine destinée à être fixée à un organe mobile,
- la figure 5 représente la platine de la figure 4 insérée dans la trappe de la figure 3,
- la figure 6 représente, en perspective et à encore plus grande échelle, l'extrémité d'un gicleur de lave-phare supportant la trappe des figures précédentes, vue depuis le bloc optique.

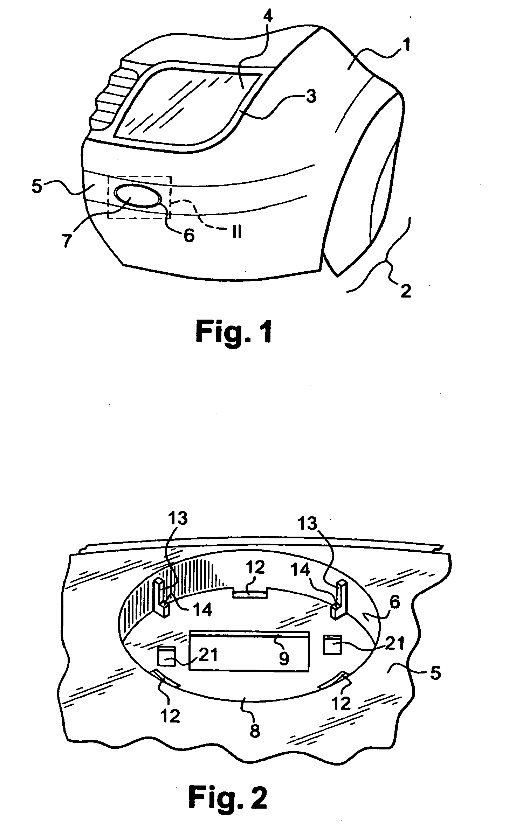

Sur la figure 1, on a représenté une peau de pare-chocs 1 qui comporte, à proximité de sa crosse 2, un décrochement 3 pour un bloc optique 4.

La peau de pare-chocs 1 comporte un rebord supérieur 5 sensiblement horizontal, à l'intérieur duquel est ménagée une ouverture 6 située à la base du bloc optique.

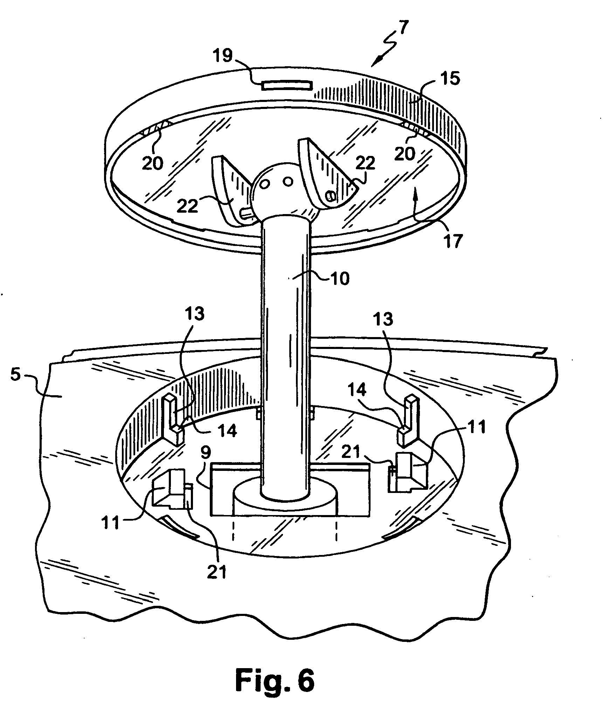

Cette ouverture 6 permet à un lave-phare 10 (figure 6) de faire saillie au-dessus du rebord 5 pour projeter un liquide nettoyant sur le vitrage du bloc optique 4.

Dans la position représentée à la figure 1, l'ouverture 6 est obturée par une trappe 7 de forme correspondante.

Sur la vue rapprochée de la figure 2, on voit mieux le détail de l'intérieur de l'ouverture 6.

Cette ouverture est conformée en cuvette avec un fond 8 au milieu duquel est prévu un passage traversant rectangulaire 9, qui est dimensionné pour permettre la traversée du gicleur de lave-phare 10.

De part et d'autre du passage traversant 9, deux orifices 21 permettent l'encliquetage du corps du gicleur, qui comporte à cet effet deux pattes d'encliquetage 11, visibles sur la figure 6.

A la périphérie de l'ouverture 6, trois lumières 12 sont percées dans le fond 8.

Par ailleurs, des nervures de centrage 13 et des épaulements 14 sont formés dans l'épaisseur de l'ouverture 6, pour assurer le centrage de la trappe 7 et le réglage de son affleurement avec le rebord supérieur 5 de la peau de pare-chocs 1.

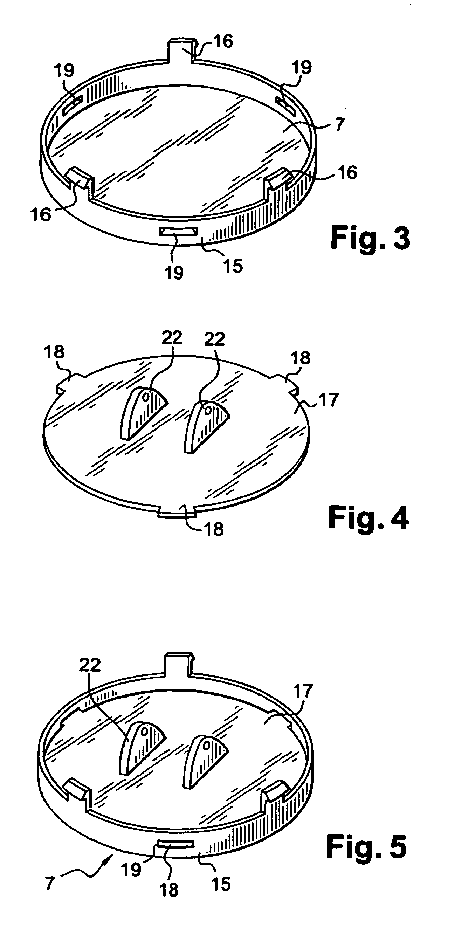

La trappe 7, qui est représentée sur la figure 3, comporte une jupe périphérique 15 dont la hauteur est telle que l'appui de cette jupe 15 sur les épaulements 14 de l'ouverture 6 positionne la trappe à l'affleurement du rebord 5.

Trois pattes d'encliquetage 16 sont venues de moulage avec la jupe 15, en étant réparties à la périphérie de la trappe 7 en coïncidence avec les lumières 12 du fond 8 de l'ouverture 6, de sorte que la trappe 7 peut être encliquetée dans l'ouverture 6 par coopération des pattes d'encliquetages 16 avec les lumières 12, pour prendre la position visible sur la figure 1.

Cette première configuration de la trappe correspond à des véhicules qui ne sont pas équipés de lave-phares.

Une autre configuration est celle dans laquelle la trappe 7 est portée par le gicleur du lave-phares 10, comme on le voit sur la figure 6.

A cet effet, une platine 17 est dimensionnée pour s'encastrer dans la trappe 7, à l'intérieur de sa jupe 15. Des languettes 18 en saillie de la périphérie de la platine 17 viennent se loger dans des lumières 19 percées dans la jupe 15, par déformation élastique de ces deux pièces.

Une fois la platine 7 insérée dans la trappe, comme représenté à la figure 5, on casse les pattes d'encliquetage 16 à leur base 20, de manière à permettre le libre déplacement de la trappe 7 entre sa position d'obturation de l'ouverture 6, visible en figure 1, et sa position de libération de l'ouverture 6, visible en figure 6.

Deux nervures de fixation 22 sont prévues au milieu de la platine 17 pour le montage de la tête du gicleur 10, comme on le voit sur la figure 6.

La trappe 7 s'applique sur les épaulements 14 lorsque la tête de gicleur est rentrée en position de repos, ce qui donne à la peau de pare-chocs l'apparence représentée à la figure 1.

En position d'utilisation de la tête de gicleur 10, comme on le voit à la figure 6, la trappe 7 est soulevée au-dessus de l'ouverture 6 et la tête de gicleur 10 peut projeter un liquide nettoyant sur le vitrage du bloc optique 4.

## Revendications

1. Trappe (7) obturatrice d'une ouverture (6) ménagée dans une pièce de carrosserie (1) pour la saillie d'un organe mobile (10), comportant des moyens (19, 22) de fixation à l'organe mobile, aptes à fixer la trappe à l'organe mobile si un organe est présent; pour un déplacement de ladite trappe solidairement avec organe mobile, **caractérisée en ce qu'**elle comporte en outre des moyens (16) de fixation à la pièce de carrosserie, pour un positionnement permanent de ladite trappe sur la pièce de carrosserie en l'absence d'organe mobile, ces moyens (16) étant des moyens d'encliquetage.

2. Trappe obturatrice selon la revendication 1, dimensionnée pour pouvoir venir se loger dans l'épaisseur de la pièce de carrosserie (1) lorsqu'elle en obture l'ouverture.

3. Trappe obturatrice selon la revendication 1 ou 2. dans laquelle l'un au moins des moyens (16) de fixation à la pièce de carrosserie est apte à être éliminé par cassure, afin de permettre aux moyens (19,'22) de fixation à l'organe mobile d'être opérationnels.

4. Trappe obturatrice selon l'une des revendications 1 à 3, dans laquelle les moyens (19, 22) de fixation à l'organe mobile comprennent des moyens (19) d'encliquetage à une platine (17) destinée à être fixée sur l'organe mobile.

5. Trappe obturatrice selon l'une quelconque des revendications précédentes pour ouverture de lave-phare, l'organe mobile étant le lave-phare.

6. Pièce de carrosserie munie d'une ouverture (6) pour la saillie d'un organe mobile (10), comportant au voisinage de cette ouverture un agencement apte à recevoir un support (11) pour ledit organe mobile, **caractérisée en ce que** ledit agencement comporte des moyens (12) de fixation permanente, sur la pièce de carrosserie, d'une trappe obturatrice (7) de l'ouverture, en l'absence d'organe mobile, l'agencement comprenant des nervures (13,14) de centrage et de réglage de l'affleurement de la trappe obturatrice.

7. Pièce de carrosserie selon la revendication 6, pour la saillie d'un lave-phare (10), l'organe mobile étant le lave-phare.

8. Peau de pare-chocs en tant que pièce de carrosserie selon la revendication 6 ou 7.

9. Pièce de carrosserie munie d'une trappe obturatrice selon l'une quelconque des revendications 1 à 5.

## Claims

1. Covering flap (7) for covering an opening (6) formed in a bodywork part (1) for the projection of a moveable member (10), having means (19, 22) of attachment to the moveable member and able to attach the flap to the moveable member if a member is present, so that said flap moves as one with the moveable member, **characterized in that** the flap also has means (16) of attachment to the bodywork part so that said flap is permanently positioned on the bodywork part if there is no moveable member present, these means (16) being snap-fastening means.

2. Covering flap according to Claim 1, designed to be able to be housed in the thickness of the bodywork part (1) when it is covering the opening.

3. Covering flap according to Claim 1 or 2, in which at least one of the means (16) of attachment to the bodywork part can be broken off in order that the means (19, 22) of attachment to the moveable member can come into operation.

4. Covering flap according to one of Claims 1 to 3, in which the means (19, 22) of attachment to the moveable member comprise means (19) for snap-fastening to a plate (17) intended to be attached to the moveable member.

5. Covering flap according to any one of the preceding claims for a headlamp washer opening, the moveable member being the headlamp washer.

6. Bodywork part provided with an opening (6) for the projection of a moveable member (10), having in the vicinity of this opening an arrangement able to hold a bracket (11) for said moveable member, **characterized in that** said arrangement has means (12) for permanently attaching a covering flap (7) for covering the opening to the bodywork part if there is no moveable member present, the arrangement comprising ribs (13, 14) for centring and adjusting the alignment of the covering flap.

7. Bodywork part according to Claim 6 for the projection of a headlamp washer (10), the moveable member being the headlamp washer.

8. Bumper skin as bodywork part according to Claim 6 or 7.

9. Bodywork part provided with a covering flap according to any one of Claims 1 to 5.

## Patentansprüche

1. Klappe (7) zur Abdeckung einer in einem Karosserieteil (1) angeordneten Öffnung für den Vorsprung einer mobilen Vorrichtung (10), umfassend Mittel (19, 22) zur Befestigung an der mobilen Vorrichtung, geeignet zum Befestigen der Klappe an der mobilen Vorrichtung, falls eine Vorrichtung vorhanden ist, zum Bewegen der Klappe zusammen mit der mobilen Vorrichtung, **dadurch gekennzeichnet, dass** sie ferner Mittel (16) zur Befestigung am Karosserieteil für eine dauerhaftes Positionieren der Klappe am Karosserieteil bei Fehlen einer mobilen Vorrichtung umfasst, wobei diese Mittel (16) Mittel zum Einrasten sind.

2. Klappe zur Abdeckung nach Anspruch 1 mit entsprechenden Abmessungen, um in der Stärke des Karosserieteils (1) Platz zu haben, wenn diese die Öffnung abdeckt.

3. Klappe zur Abdeckung nach Anspruch 1 oder 2, wobei wenigstens eines der Mittel (16) zur Befestigung am Karosserieteil geeignet ist, um durch Abbrechen entfernt zu werden, damit die Mittel (19, 22) zur Befestigung an der mobilen Vorrichtung einsatzbereit sind.

4. Klappe zur Abdeckung nach einem der Ansprüche 1 bis 3, wobei die Mittel (19, 22) zur Befestigung an der mobilen Vorrichtung Mittel (19) zum Einrasten in einer Platte (17) zur Befestigung an der mobilen Vorrichtung umfassen.

5. Klappe zur Abdeckung nach einer der vorhergehenden Ansprüche für eine Öffnung einer Scheinwerferwaschanlage, die die mobilen Vorrichtung ist.

6. Mit einer Öffnung (6) für den Vorsprung einer mobilen Vorrichtung (10) ausgestattetes Karosserieteil, umfassend eine Anordnung in der Nähe dieser Öffnung geeignet zur Aufnahme eines Trägers (11) für die mobile Vorrichtung, **dadurch gekennzeichnet, dass** die Anordnung Mittel (12) zur dauerhaften Befestigung einer Klappe zur Abdeckung (7) der Öffnung am Karosserieteil bei Fehlen einer mobilen Vorrichtung umfasst, wobei die Anordnung Rippen (13, 14) zum Zentrieren und Einrichten der Passung der Klappe zur Abdeckung umfasst.

7. Karosserieteil nach Anspruch 6 für den Vorsprung einer Scheinwerferwaschanlage (10), die die mobilen Vorrichtung ist.

8. Stoßfängerhaut in Form eines Karosserieteils nach Anspruch 6 oder 7.

9. Mit einer Klappe zur Abdeckung nach einem der Ansprüche 1 bis 5 ausgestattetes Karosserieteil.
